# EUROPÄISCHE PATENTANMELDUNG

(11) **EP 4 748 977 A1**
(43) Veröffentlichungstag der Anmeldung: **27.05.2026**
(21) Anmeldenummer: 24215189.2
(22) Anmeldetag: 25.11.2024
(51) Int. Cl.: C25B 9/75, H01M 8/2483, C25B 1/04

(54) **KANALSTÜCK SOWIE BRENNSTOFF- UND/ODER ELEKTROLYSEZELLENANORDNUNG**

(71) Anmelder: Sunfire SE, 01237 Dresden (DE)
(72) Erfinder: Wenske, Michael, 04668 Grimma (DE); Ralphs, John, 01774 Klingenberg (DE); Massoudi-Farid, Massoud, 01277 Dresden (DE)
(74) Vertreter: Epping - Hermann - Fischer

(57) **Zusammenfassung**

Ein Kanalstück (100) für eine Brennstoff- und/oder eine Elektrolysezellenanordnung (200) weist auf:
- einen Kanalkörper (110), der einen Fluidkanal (111) umgibt,
- einen Durchlass (112), der in dem Kanalkörper (110) ausgebildet ist und mit dem Fluidkanal (111) verbunden ist,
- eine Verteilerstruktur (120), die mit dem Durchlass (112) verbunden ist, wobei die Verteilerstruktur (120) eine Mehrzahl von Auslässen (121) aufweist, um ein Fluid in eine Halbzelle (201) der Brennstoff- und/oder der Elektrolysezellenanordnung (200) zu leiten, wobei der Durchlass (112) ausgebildet ist, einen Fluidfluss durchzuleiten von dem Fluidkanal (111) zu der Verteilerstruktur (120).

## Beschreibung

Die Offenbarung betrifft ein Kanalstück für eine Brennstoff- und/oder eine Elektrolysezellenanordnung. Die Offenbarung betrifft weiterhin eine Brennstoff- und/oder eine Elektrolysezellenanordnung, insbesondere eine Brennstoff- und/oder eine Elektrolysezellenanordnung, die ein hier beschriebenes Kanalstück aufweist.

Elektrolyseure werden beispielsweise unter Verwendung einer alkalischen Lösung betrieben, um mit Hilfe von Elektroenergie Wasserstoff und Sauerstoff zu gewinnen. Im Brennstoffzellenbetrieb ist es möglich, aus Wasserstoff und Luft Elektroenergie zu gewinnen.

Es ist wünschenswert, ein Kanalstück für eine Brennstoff- und/oder eine Elektrolysezellenanordnung anzugeben, das einen verlässlichen und insbesondere verbesserten Betrieb ermöglicht. Es ist zudem wünschenswert, eine Brennstoff- und/oder eine Elektrolysezellenanordnung anzugeben, die verlässlich betreibbar ist.

Ausführungsformen der Offenbarung betreffen ein Kanalstück für eine Brennstoff- und/oder eine Elektrolysezellenanordnung. Weitere Ausführungsformen der Offenbarung betreffen eine Brennstoff- und/oder eine Elektrolysezellenanordnung, insbesondere mit einem Kanalstück gemäß einer der hier beschriebenen Ausführungsformen.

Das Kanalstück weist einen Kanalkörper auf. Der Kanalkörper umgibt einen Fluidkanal. Ein Durchlass ist in dem Kanalkörper ausgebildet. Der Durchlass ist mit dem Fluidkanal verbunden. Beispielsweise weist der Durchlass einen Einlass auf. Der Einlass ist dem Fluidkanal zugewandt. Im Betrieb ist es möglich, dass Fluid aus dem Fluidkanal durch den Einlass hindurch in den Durchlass strömt.

Die Verbindung zwischen dem Durchlass und dem Fluidkanal ermöglicht insbesondere einen Fluidfluss zwischen dem Fluidkanal und dem Durchlass. Eine Verteilerstruktur ist mit dem Durchlass verbunden. Die Verbindung ermöglicht insbesondere einen Fluidfluss zwischen der Verteilerstruktur und dem Durchlass. Der Durchlass ist ausgebildet, einen Fluidfluss durchzuleiten von dem Fluidkanal zu der Verteilerstruktur. Das Fluid ist insbesondere beispielsweise eine Lauge, insbesondere eine KOH-Lauge. Der Durchlass ist ausgebildet für einen Fluidfluss von dem Fluidkanal zu der Verteilerstruktur.

Die Verteilerstruktur weist eine Mehrzahl von Auslässen auf, um das Fluid in eine Halbzelle der Brennstoff- und/oder Elektrolysezellenanordnung zu leiten. Das Kanalstück mit der Verteilerstruktur, die die Mehrzahl von Auslässen aufweist, ermöglicht eine verlässliche Verteilung des Fluids während des Betriebs. Das Fluid lässt sich wie gewünscht mittels der Mehrzahl von Auslässen über die Halbzelle verteilen. Im Betrieb strömt das Fluid aus den Auslässen und überströmt so eine gewünscht große Fläche in der Halbzelle. Das Kanalstück ermöglicht so, die Leistungsfähigkeit, also beispielsweise die Effizienz der Wasserstoffproduktion, zu steigern.

Das Kanalstück ermöglicht eine verbesserte Zirkulation des Fluids im Vergleich zu herkömmlichen Kanalstücken mit lediglich einem einzigen Auslass. Das Fluid, das insbesondere die KOH-Lauge aufweist oder aus der KOH-Lauge besteht, versorgt im Betrieb die Halbzelle mit H2O und bewirkt dabei auch eine Kühlung der Halbzelle. Im Betrieb wird mittels des Fluids Prozesswärme aus der Halbzelle abgeführt. Die Kühlung und/oder das Abführen der Prozesswärme beeinflusst die Menge an elektrischer Energie, die in die Elektrolysezellenanordnung eingespeist werden kann. Bei gleichem Strom ermöglicht das Kanalstück mit der Mehrzahl von Auslässen eine verbesserte Fluidströmung, somit eine höhere/verbesserte Kühlung und damit eine Anhebung der Effizienz.

Der Fluidkanal ist ausgebildet, die KOH-Lauge zu leiten. Insbesondere ist es möglich, dass im Betrieb in der Elektrolysezellenanordnung eine Mehrzahl von Kanalstücken gemeinsam einen langen Fluidkanal ausbilden, um die nebeneinander angeordneten Halbzellen mit dem Fluid zu versorgen. Der Fluidkanal stellt somit eine gemeinsame Zuleitung für das Fluid für eine Mehrzahl von Halbzellen dar. Je Halbzelle ist eine Verteilerstruktur vorgesehen, sodass Fluid aus dem Fluidkanal in die jeweilige Halbzelle einbringbar ist.

Die Verteilerstruktur ist ausgebildet, das Fluid aus dem Fluidkanal möglichst weit verteilt in die Halbzelle einzuleiten. Beispielsweise wird durch das Einbringen des Fluids mittels der Mehrzahl von Auslässen im Betrieb ermöglicht, dass Gasblasen, beispielsweise 02 und/oder H2, die an Wänden der Halbzelle, beispielsweise einer Bipolarplatte und/oder einer Membran/Diaphragma, anhaften, mittels des Fluidstroms mitgerissen werden und somit von den Wänden abgelöst werden. Dies ermöglicht eine bessere Kühlung und somit eine erhöhte Effizienz. Ferner wird durch das Ablösen von Gasblasen die in dem elektrolytischen Prozess effektiv wirksame Fläche möglichst groß belassen.

Beispielsweise ermöglicht das Kanalstück mit der Verteilerstruktur ein möglichst gleichmäßiges Anströmen der wirksamen Fläche in der Halbzelle. Die Verteilerstruktur weist insbesondere einen Eingang auf, der mit dem Durchlass gekoppelt ist zur fluiden Kommunikation. Die Verteilerstruktur weist die Mehrzahl von Auslässen auf, die insbesondere so ausgeformt sind, dass die gewünschte Strömung des Fluids in der Halbzelle im Betrieb ermöglicht ist.

Gemäß Ausführungsformen weist das Kanalstück einen länglich ausgedehnten Verteilkörper auf. Der Verteilkörper ist insbesondere quer zu einer Stapelrichtung länglich ausgedehnt, entlang derer Halbzellen angeordnet sind. Der Verteilkörper weist die Verteilerstruktur auf. Der Verteilkörper ist fluidleitfähig mit dem Durchlass verbunden. Beispielsweise sind der Verteilkörper und der Kanalkörper als separate Bauteile ausgebildet, die miteinander koppelbar sind. Im Betrieb sind der Verteilkörper und der Kanalkörper insbesondere so miteinander gekoppelt, dass eine Fluidleitung von dem Durchlass in den Verteilkörper möglich ist.

Der Verteilkörper ist insbesondere so ausgebildet, dass die Mehrzahl von Auslässen langgestreckt in der Halbzelle anordenbar ist. Insbesondere ist die äußere Form des Kanalkörpers unabhängig davon ausbildbar, wie die äußere Form des Verteilkörpers ausgebildet sein muss, um die Mehrzahl von Auslässen zu ermöglichen. Die Ausgestaltung des Kanalkörpers und des Verteilkörpers als separate Bauteile ermöglicht somit beispielsweise, dass der Verteilkörper in Abhängigkeit von den Anforderungen der verwendeten Elektrolysezellenanordnung vorgegeben wird, insbesondere von der Ausgestaltung der Halbzelle. Der Kanalkörper kann beispielsweise modular für eine Mehrzahl von verschieden ausgestalteten Halbzellen verwendet werden. Der separate Verteilkörper ermöglicht eine großflächige Verteilung der Mehrzahl von Auslässen.

Gemäß Ausführungsformen weist der Kanalkörper die Verteilerstruktur auf. Es ist möglich, dass der Kanalkörper zusätzlich zu dem Verteilkörper die Verteilerstruktur aufweist. Es ist auch möglich, dass lediglich der Kanalkörper die Verteilerstruktur aufweist und kein Verteilkörper zusätzlich vorgesehen ist. Das Kanalstück ist somit insbesondere einstückig ausbildbar.

Gemäß Ausführungsformen weist die Verteilerstruktur einen Verteilerkanal auf. Der Verteilerkanal ist umlaufend um den Fluidkanal angeordnet. Der Verteilerkanal ist mit dem Durchlass verbunden für einen Fluidfluss zwischen dem Durchlass und dem Verteilerkanal. Der Verteilerkanal ist mit der Mehrzahl von Auslässen verbunden für einen Fluidfluss zwischen dem Verteilerkanal und der Mehrzahl von Auslässen. Der Verteilerkanal ermöglicht somit den Fluidfluss von dem Durchlass, der beispielsweise als der einzige Fluideingang vorgesehen ist, zu der Mehrzahl von Auslässen. Die Integration des Verteilerkanals in den Kanalkörper ermöglicht eine bauraumsparende Anordnung der Verteilerstruktur. Somit wird insbesondere im Vergleich zu herkömmlichen Kanalstücken kein zusätzlicher Bauraum benötigt. Im Betrieb fließt das Fluid, insbesondere die KOH-Lauge, aus dem Fluidkanal durch den Durchlass in den Verteilerkanal und wird dort zu der Mehrzahl von Auslässen verteilt.

Gemäß Ausführungsformen ist der Verteilerkanal ringförmig konzentrisch zu dem Fluidkanal ausgebildet. Die Auslässe der Mehrzahl von Auslässen erstrecken sich dann beispielsweise jeweils radial von dem Verteilerkanal nach außen.

Gemäß Ausführungsformen ist der Verteilerkanal exzentrisch zu dem Fluidkanal ausgebildet. Die Auslässe der Mehrzahl von Auslässen erstrecken sich beispielsweise jeweils radial von dem Verteilerkanal nach außen.

Gemäß Ausführungsformen weist der Verteilerkanal entlang seines Verlaufs unterschiedlich große Querschnitte auf. Somit ist es beispielsweise möglich, eine Drosselwirkung des Verteilerkanals zu realisieren. Somit ist es möglich, die Verteilung des Fluids, das über die jeweiligen Auslässe der Mehrzahl von Auslässen aus dem Verteilerkanal abgeführt wird, vorzugeben. Beispielsweise ist es somit möglich, eine gewünschte Druckverteilung in dem Verteilerkanal zu realisieren. Mittels der unterschiedlich großen Querschnitte ist die Strömung des Fluids vorgegeben beeinflussbar, um eine gewünschte Druckverteilung an den Auslässen zu ermöglichen.

Gemäß Ausführungsformen ist der Durchlass in einem Bereich des Verteilerkanals mit dem Verteilerkanal verbunden, der frei von Auslässen ist. Somit ist eine gewünschte Verteilung des Fluids auf die Auslässe möglich. Das Fluid wird im Betrieb gleichmäßig oder wie gewünscht auf die Auslässe verteilt. Im betriebsfertigen Zustand und einer herkömmlichen Anordnung ist der Durchlass beispielsweise unten angeordnet und die Auslässe ermöglichen ein Ausströmen des Fluids seitlich und oben.

Gemäß Ausführungsformen weist der Kanalkörper einen Vorsprung auf. Der Kanalkörper springt in den Fluidkanal vor. Der Durchlass ist in dem Vorsprung ausgebildet. Der Vorsprung ermöglicht eine Verlängerung des Durchlasses. Dabei wird insbesondere kein zusätzlicher Bauraumbedarf notwendig. Der Fluidkanal wird wie vorgesehen ausgebildet und der Vorsprung springt in den Fluidkanal, also in den Freiraum, der von dem Kanalkörper umgeben wird, vor. Der Vorsprung ermöglicht beispielsweise eine gewünschte Drosselwirkung des Durchlasses zu realisieren. Der Durchlass ist insbesondere so gestaltet in Bezug auf Querschnitt und/oder Länge, dass ein gewünschter Fluidstrom von dem Fluidkanal zu der Verteilerstruktur im Betrieb auftritt.

Gemäß Ausführungsformen ist alternativ oder zusätzlich zu dem Vorsprung eine Ausbuchtung vorgesehen. Die Ausbuchtung springt weg von dem Fluidkanal vor. Der Durchlass ist in der Ausbuchtung ausgebildet. Mittels der Ausbuchtung ist somit der Durchlass verlängerbar. Insbesondere ist eine Länge des Durchlasses vorgebbar, ohne zusätzlichen Bauraumbedarf. Die Ausbuchtung ermöglicht vergleichbar zu dem Vorsprung eine Drosselwirkung des Durchlasses wie gewünscht vorzugeben. Somit ist der Fluidstrom von dem Fluidkanal zu der Verteilerstruktur vorgebbar. Beispielsweise erstreckt sich der Durchlass lediglich durch den Vorsprung. Beispielsweise erstreckt sich der Durchlass lediglich durch die Ausbuchtung. Beispielsweise erstreckt sich der Durchlass sowohl durch den Vorsprung als auch durch die Ausbuchtung.

Gemäß Ausführungsformen ist der Kanalkörper aus einem elektrisch isolierenden Material gebildet. Der Kanalkörper weist ein elektrisch isolierendes Material auf oder besteht aus einem elektrisch isolierenden Material. Der Kanalkörper ist insbesondere hochohmig ausgebildet. Beispielsweise ist der Kanalkörper aus einem Kunststoff, beispielsweise aus PTFE, POM, PEEK, einer Keramik und/oder einem Faserverbundwerkstoff gebildet. Beispielsweise ist der Kanalkörper mittels Spritzgießen herstellbar und/oder hergestellt. Beispielsweise ist auf teurere Materialen wie PTFE verzichtbar.

Gemäß Ausführungsformen weist der Kanalkörper eine Montageschnittstelle zur Montage einer Bipolarplatte der Brennstoff- und/oder der Elektrolysezellenanordnung auf. Insbesondere ist die Bipolarplatte mittels eines Befestigungselements, beispielsweise einer Mutter, die auf die Montageschnittstelle aufschraubbar ist, an dem Kanalkörper befestigbar. Die Bipolarplatte ist somit zwischen der Montageschnittstelle und der Mutter eingespannt. Die Montageschnittstelle weist beispielsweise ein Gewinde auf, mit dem die Mutter verschraubbar ist.

Gemäß Ausführungsformen weist eine Brennstoff- und/oder Elektrolysezellenanordnung eine Mehrzahl von Halbzellen auf. Die Brennstoff- und/oder Elektrolysezellenanordnung weist eine Mehrzahl von Kanalstücken gemäß einer der hier beschriebenen Ausführungsformen auf. Die Brennstoff- und/oder Elektrolysezellenanordnung kann im Folgenden auch als Anordnung bezeichnet werden.

Die Anordnung weist die Mehrzahl von Kanalstücken auf, wobei die Kanalstücke der Mehrzahl von Kanalstücken so miteinander gekoppelt sind, dass die Fluidkanäle der Kanalstücke gemeinsam eine Fluidzuleitung zum Leiten von Fluid in die Halbzellen ausbilden. Die jeweiligen Durchlässe der Kanalstücke sind vorgegeben dimensioniert für eine vorgegebene Verteilung des Fluids über die Halbzellen. Somit ist es möglich, mittels gleichartig ausgebildeter Kanalstücke, die so aneinander anschließend angeordnet sind, dass die Fluidkanäle jeweils unmittelbar aneinander angrenzen, die gemeinsame Fluidleitung auszubilden. Die Fluidzuleitung zu den Halbzellen der Anordnung ist somit mittels der Mehrzahl der Kanalstücke ausgebildet. Das Fluid, insbesondere die KOH-Lauge, wird in die Fluidzuleitung eingespeist und mittels der Durchlässe und der Verteilerstruktur in die Halbzellen geleitet.

Gemäß Ausführungsbeispielen weist die Anordnung zwei Fluidzuleitungen auf zum Leiten von Fluid in jeweils eine Halbzelle der Halbzellen. Die jeweilige Halbzelle ist somit mittels zwei Fluidzuleitungen mit Fluid versorgbar. Fluid wird mittels zweier Fluidzuleitungen, zweier Durchlässe und zweier Verteilerstrukturen in eine gemeinsame Halbzelle eingespeist. Somit ist eine gewünschte Verteilung des Fluids im Betrieb in der Halbzelle realisierbar.

Gemäß Ausführungsbeispielen weisen die Halbzellen jeweils einen Zellrahmen auf. Beispielsweise ist je Halbzelle ein Zellrahmen vorgesehen. Der Kanalkörper ist beispielsweise in dem Zellrahmen angeordnet. Alternativ oder zusätzlich ist der Kanalkörper beispielsweise außerhalb des Zellrahmens angeordnet. Es ist möglich, dass der Kanalkörper in den Zellrahmen integriert ist. Es ist möglich, dass der Kanalkörper ein separates Bauteil ist, dass in einer Ausnehmung des Zellrahmens angeordnet ist. Insbesondere ist somit die Verteilerstruktur in dem Zellrahmen angeordnet. Insbesondere ist somit die Verteilerstruktur im Bereich des Zellrahmens angeordnet.

Weitere Vorteile, Merkmale und Weiterbildungen ergeben sich aus den nachfolgenden, in Verbindung mit den Figuren erläuterten Beispielen. Gleiche, gleichartige und gleich wirkende Elemente können figurenübergreifend mit den gleichen Bezugszeichen versehen sein.

Es zeigen:
Figur 1 eine schematische Darstellung eines Teils einer Anordnung gemäß einem Ausführungsbeispiel, und
Figuren 2 bis 5 jeweils eine schematische Darstellung eines Kanalstücks gemäß Ausführungsbeispielen.

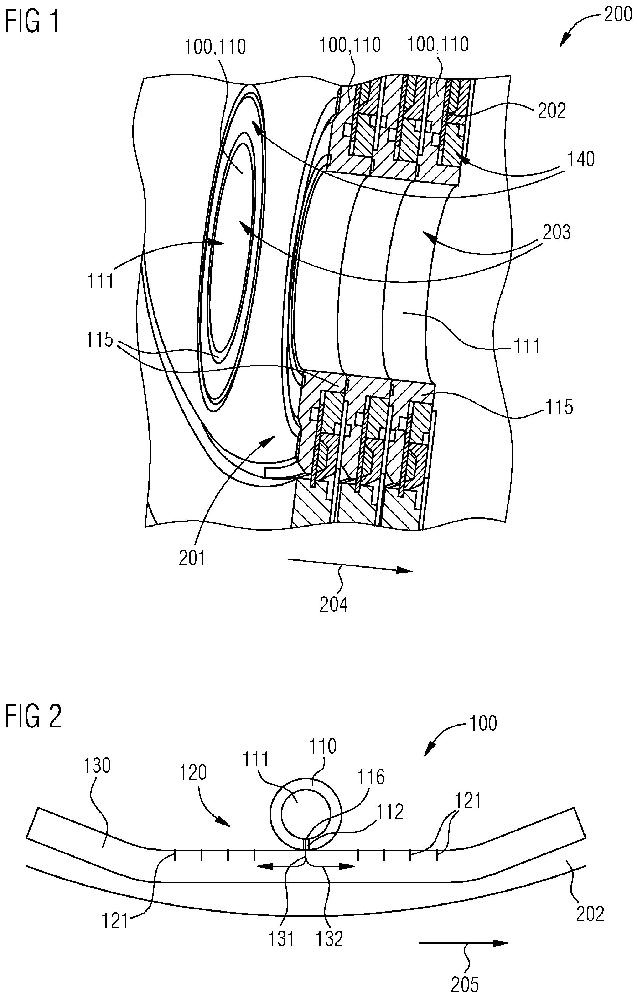

Figur 1 zeigt eine schematische Darstellung eines Teils einer Elektrolysezellenanordnung 200. Die Anordnung 200 kann auch eine Brennstoffzellenanordnung 200 sein. Insbesondere ist es möglich, mittels der Anordnung 200 unter Verwendung einer Lauge, insbesondere einer KOH-Lauge, Sauerstoff und Wasserstoff zu erzeugen. Mittels einer Brennstoffzellenanordnung 200 ist es möglich, aus Wasserstoff und Luft elektrische Energie zu gewinnen.

Die Anordnung 200 weist eine Mehrzahl von Halbzellen 201 auf, die entlang einer Stapelrichtung 204 angeordnet sind. Die Halbzellen 201 werden jeweils durch eine Bipolarplatte 202 voneinander getrennt. Je eine Bipolarplatte 202 ist entlang der Stapelrichtung 204 zwischen zwei unmittelbar benachbarten Halbzellen 201 angeordnet. Insofern, dass in den Halbzellen 201 abwechselnd jeweils eine Anode und eine Kathode angeordnet ist, kontaktiert die Bipolarplatte 202 elektrisch sowohl eine Anode als auch eine Kathode. Somit bilden die Halbzellen 201 zwischen zwei Bipolarplatten 202 eine Zelle aus.

Im Betrieb wird eine wasserstoff- und sauerstoffhaltige Lösung, insbesondere die KOH-Lauge, in die Halbzellen 201 eingebracht. Im elektrolytischen Prozess werden die beiden Halbzellen 201 einer Zelle elektrisch versorgt. Das erfolgt mittels einer elektrischen Reihenschaltung der Zellen. Die elektrische Verbindung zwischen zwei Zellen wird mittels der zwischen den beiden Zellen angeordnete Bipolarplatte 202 hergestellt.

Zum Zuführen der Lauge ist eine Fluidzuleitung 203 angeordnet. Die Fluidzuleitung 203 erstreckt sich durch die Anordnung 200 und ist ausgebildet, die Halbzellen 201 jeweils mit Lauge zu versorgen.

Es ist möglich, dass eine einzige Fluidzuleitung 203 ausgebildet ist. Es ist auch möglich, dass wie in Figur 1 dargestellt, zwei oder mehr Fluidzuleitungen 203 in der Brennstoffzelle 200 vorgesehen sind. Somit ist es möglich, jede der Halbzellen 201 mittels der mehreren Fluidzuleitungen 203 mit Lauge zu versorgen.

Insbesondere ist die Fluidzuleitung 203 oder sind die Fluidzuleitungen 203 in einem unteren Bereich der Halbzellen 201 angeordnet, um die Lauge in die Halbzellen 201 unten einzuspeisen. Die Lauge strömt dann entlang der Bipolarplatten 202 nach oben. Folglich werden die fluiddurchlässigen Elektroden (Anode, Kathode) aufgrund ihrer mechanischen Konstruktion und elektrischen Kontaktierung mit durchströmt.

"Oben" und "unten" beziehen sich im Rahmen dieser Offenbarung insbesondere auf eine Positionierung der Anordnung 200 in einem betriebsbereiten Zustand. "Unten" ist dabei einem Untergrund, auf dem die Anordnung 200 abgestützt ist, näher als "oben". Gase wie Wasserstoff oder Sauerstoff steigen in den Halbzellen 201 in der Lauge von unten nach oben.

Die Fluidzuleitung 203 ist aus einer Mehrzahl von Kanalstücken 100 gebildet. Insbesondere ist je Halbzelle 201 ein Kanalstück 100 vorgesehen. Die Kanalstücke 100 sind entlang der Stapelrichtung 204 gestapelt. Die Kanalstücke 100 sind entlang der Stapelrichtung 204 gegeneinandergepresst, sodass die fluiddichte Fluidzuleitung 203 mittels der Kanalstücke 100 ausgebildet ist. Beispielsweise sind zusätzliche Dichtungen zwischen den Kanalstücken 100 vorgesehen.

Die Kanalstücke 100 umgeben gemeinsam die Fluidzuleitung 203, um die Lauge mittels der Fluidzuleitung 203 zu den Halbzellen 201 zu führen.

Falls zwei Fluidzuleitungen 203 in der Anordnung 200 vorgesehen sind, sind je Halbzelle 201 zwei Kanalstücke 100 vorgesehen. Die Kanalstücke werden entlang der Stapelrichtung 204 gestapelt, um genau eine Fluidzuleitung 203 auszubilden. Es ist möglich, mittels zweier Stapel von Halbzellen 201 zwei Fluidleitungen 203 auszubilden, wie in Figur 1 dargestellt. Die Fluidleitungen 203 sind gleichartig ausgebildet. Nachfolgend wird daher lediglich auf eine der Fluidleitungen 203 eingegangen, wobei das Beschriebene auch für etwaige weitere Fluidzuleitungen 203 und deren Kanalstücke 100 gilt.

Die Kanalstücke 100 der Fluidleitung 203 sind insbesondere gleichartig ausgebildet. Insbesondere ist jedes der Kanalstücke 100 gleich ausgebildet zu den anderen der Kanalstücke 100. Mittels der Mehrzahl der gleich ausgeformten Kanalstücke 100 ist die Fluidzuleitung 203 ausgebildet.

Im Folgenden wird daher eines der Kanalstücke 100 beschrieben, wobei die Ausführungen auch für die anderen der Kanalstücke 100 gelten.

Das Kanalstück 100 weist einen Kanalkörper 110 auf. Der Kanalkörper 110 ist aus einem elektrisch isolierenden Material gebildet. Beispielsweise ist der Kanalkörper aus einem Kunststoff, einer Keramik oder einem Faserverbundwerkstoff gebildet. Der Kanalkörper 100 ist aus einem Material gebildet, das für die im Betrieb auftretenden Temperaturen und Drücke sowie die verwendeten Fluide, insbesondere die KOH-Lauge, ausgebildet ist.

Die Kanalkörper 110 sind entlang der Stapelrichtung 204 gegeneinandergepresst, sodass die fluiddichte Fluidzuleitung 203 mittels der Kanalkörper 110 ausgebildet ist. Beispielsweise sind zusätzliche Dichtungen zwischen den Kanalkörpern 110 vorgesehen.

Der Kanalkörper 110 umgibt einen Fluidkanal 111. Der Fluidkanal 111 erstreckt sich entlang der Stapelrichtung 204 durch den Kanalkörper 110. Der Fluidkanal 111 ist Teil der Fluidzuleitung 203. Die gestapelten Kanalstücke 100 und die jeweils aneinander angrenzenden Fluidkanäle 111 bilden gemeinsam die Fluidzuleitung 203. Beispielsweise umgibt der Kanalkörper 110 den Fluidkanal 111 ringförmig, sodass ein kreisförmiger Fluidkanal 111 ausgebildet ist. Beispielsweise weist der Fluidkanal 111 einen Innendurchmesser von 60 bis 100 mm auf.

Der Kanalkörper 110 weist eine Montageschnittstelle 115 auf. Die Montageschnittstelle 115 ist beispielsweise ein entlang der Stapelrichtung 204 vorspringender Flansch. Die Montageschnittstelle 115 weist insbesondere ein Gewinde auf, um gemeinsam mit einer Mutter 140 eine Schraubverbindung auszubilden. Die Bipolarplatte 202 ist insbesondere entlang der Stapelrichtung 204 zwischen dem Kanalkörper 110 und der Mutter 140 angeordnet. Beispielsweise ist die Bipolarplatte 202 auf den Kanalkörper 110 aufgesteckt, sodass sich die Montageschnittstelle 115 entlang der Stapelrichtung 204 durch die Bipolarplatte 202 erstreckt. Die Mutter 140 ist auf die Montageschnittstelle 115 aufgeschraubt, sodass die Bipolarplatte 202 zwischen dem Kanalkörper 110 und der Mutter 140 verspannt ist. Die Mutter 140 drückt die Bipolarplatte 202 gegen den Kanalkörper 110 entlang der Stapelrichtung 204.

Wie in Verbindung mit den nachfolgenden Figuren 2 bis 5 näher erläutert wird, weist das Kanalstück 100 einen Durchlass 112 sowie eine Verteilerstruktur 120 auf, um eine fluide Kommunikation zwischen dem Fluidkanal 111 und der Halbzelle 201 zu ermöglichen. Im Betrieb ist es möglich, dass das Fluid aus dem Fluidkanal 111 durch einen Einlass 116 hindurch in den Durchlass 112 gelangt. Durch den Durchlass 112 hindurch fließt das Fluid zu der Verteilerstruktur 120 und von der Verteilerstruktur 120 aus in die Halbzelle 201 gelangt. Hierfür weist die Verteilerstruktur 120 eine Mehrzahl von Auslässen 121 auf, aus denen im Betrieb das Fluid in die Halbzelle 201 strömt. Fluid aus dem Fluidkanal 111 wird somit mittels der Mehrzahl an Auslässen 121 in die Halbzelle 201 eingebracht. Dies ermöglicht, dass das Fluid über eine möglichst große Fläche der Bipolarplatte 202 in der Halbzelle 201 gleichmäßig strömt.

Insbesondere wird eine großflächigere Strömung ermöglicht als bei herkömmlichen Kanalkörpern, die lediglich einen einzigen Auslass aufweisen. Die großflächigere Strömung entlang der Bipolarplatte 202 ermöglicht insbesondere eine bessere Wärmeabfuhr von der Bipolarplatte 202 und somit eine bessere Kühlung der Bipolarplatte 202. Beispielsweise werden Gasblasen, die an der Bipolarplatte 202 anhaften, von der Strömung mitgerissen, wobei die großflächigere Strömung auf eine größere Fläche der Bipolarplatte 202 von Gasblasen befreien kann. Auch dieses Mitreißen der Gasblasen verbessert die Wärmeabfuhr und somit die Kühlung. Somit ist die Effizienz der Anordnung verbesserbar, da bei einer besseren Kühlung und besseren Abführung der Prozesswärme eine höhere Menge an elektrischer Energie eingespeist werden kann.

Figur 2 zeigt das Kanalstück 100 gemäß einem Ausführungsbeispiel. Das Kanalstück 100 weist den Kanalkörper 101 auf, der den Fluidkanal 111 umgibt. Das Kanalstück 100 weist einen separaten Verteilkörper 130 auf. Der Verteilkörper 130 ist quer zur Stapelrichtung 204 länglich ausgedehnt und erstreckt sich beispielsweise entlang eines Ringsegments. Der Verteilkörper 130 ist insbesondere aus dem gleichen Material gebildet wie der Kanalkörper 110. Es ist auch möglich, dass der Kanalkörper 110 und der Verteilkörper 130 aus unterschiedlichen Materialien gebildet ist. Insbesondere ist der Verteilkörper 130 beispielsweise aus einem elektrisch isolierenden Material, insbesondere aus einem Kunststoff, aus einer Keramik oder einem Faserverbundwerkstoff.

Der Verteilkörper 130 weist einen Eingang 131 auf. Der Verteilkörper 130 weist die Mehrzahl von Auslässen 121 auf. Der Eingang 131 ist mit dem Durchlass 112 des Kanalkörpers 110 zur fluiden Kommunikation gekoppelt. Somit ist es im Betrieb möglich, dass das Fluid aus dem Fluidkanal 111 über den Einlass 116 durch den Durchlass 112 hindurch zum Eingang 131 des Verteilkörpers 130 geleitet wird und in eine Fluidleitung 132 des Verteilkörpers 130 geleitet wird.

Die Fluidleitung 132 erstreckt sich entlang der Längsausdehnung des Verteilkörpers 130. Aus der Fluidleitung 132 gelangt das Fluid zu den Auslässen 121 und von dort in die Halbzelle 201. Die Auslässe 121 sind entlang einer Querrichtung 205 angeordnet. Die Querrichtung 205 ist insbesondere senkrecht zur Stapelrichtung 204 ausgerichtet. Die Hauptausdehnung der Bipolarplatte 202 verläuft entlang der Querrichtung 205.

Der Verteilkörper 130 mit der Mehrzahl von Auslässen 121 ermöglicht ein verteiltes Einströmen des Fluids in die Halbzelle 201. Eine gewünschte Verteilung und Strömungsführung des Fluids in der Halbzelle 201 ist somit möglich. Die Ausdehnung entlang der Querrichtung 205 des Verteilkörpers 130 ist insbesondere deutlich länger als die Ausdehnung des Kanalkörpers 110 entlang der Querrichtung 205. Mittels des Durchmessers der Fluidleitung 132 sowie der Anordnung und der Größe der einzelnen Auslässe 121 entlang des Verteilkörpers 130 sind gewünschte Fluidwiderstände individuell vorgebbar, um eine gewünschte Strömungsverteilung im Betrieb zu realisieren. Somit ist eine Strömungsverteilung, Strömungsrichtung und Flussrichtung des Fluids im Betrieb je Halbzelle 201 vorgebbar.

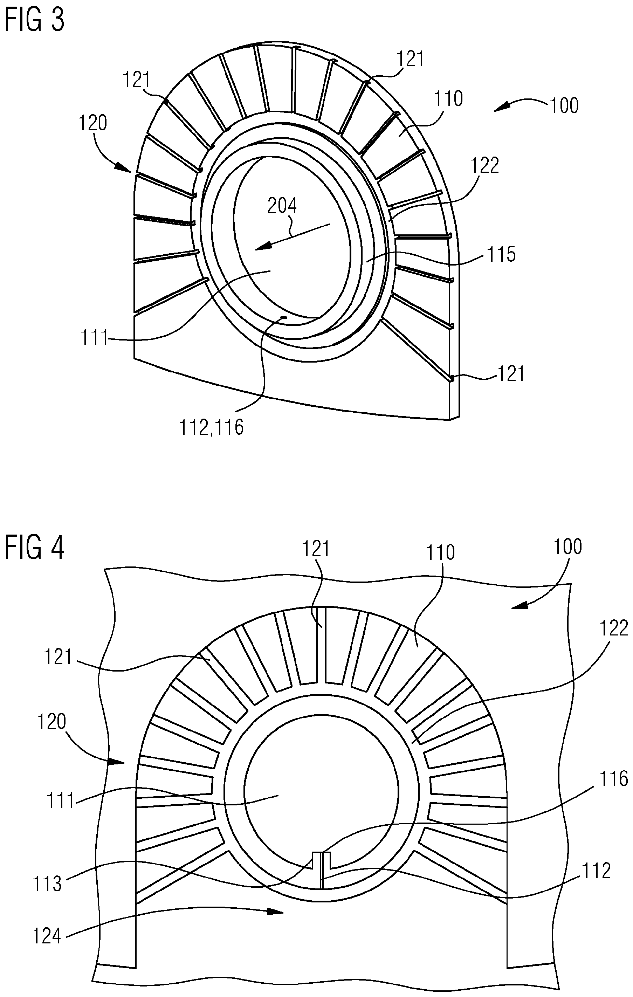

Figuren 3 bis 5 zeigen das Kanalstück 100 gemäß weiteren Beispielen. Im Unterschied zu Figur 2 ist die Verteilerstruktur 120 in den Beispielen gemäß Figuren 3 bis 5 integraler Bestandteil des Kanalkörpers 110. Auf einem separaten Verteilkörper 130 wird verzichtet.

Wie in Figuren 3 bis 5 dargestellt umgibt der Kanalkörper 110 umgibt den Fluidkanal 111. Der Kanalkörper 110 weist die Montageschnittstelle 115 auf, die insbesondere auch den Fluidkanal 111 ringförmig umgibt.

Der Kanalkörper 111 umgibt den Durchlass 112, der insbesondere in einem unteren Bereich des Fluidkanals 111 ausgebildet ist und sich senkrecht zur Stapelrichtung 204 erstreckt. Beispielsweise ist der Durchlass 112 an der Montageschnittstelle 115 ausgebildet.

Der Kanalkörper 110 weist einen Verteilerkanal 122 auf. Der Verteilerkanal 122 erstreckt sich gemäß den Beispielen der Figuren 3 und 4 konzentrisch ringförmig um den Fluidkanal 111. Der Fluidkanal 111 und der Verteilerkanal 122 sind insbesondere mittels des Einlasses 116 und des Durchlasses 112 fluidisch miteinander verbunden. Außerhalb des Durchlasses 112 sind der Fluidkanal 111 und der Verteilerkanal 122 getrennt. Insbesondere kann das Fluid von dem Fluidkanal 111 nur durch den Einlass 116 in den Durchlass 112 gelangen.

Insbesondere ist der Verteilerkanal 122 in die Richtung, in die die Montageschnittstelle 115 vorspringt, also insbesondere in die Stapelrichtung 204, offen. An dieser offenen Seite wird der Verteilerkanal 122 im betriebsfertigen Zustand von der Bipolarplatte 202 verschlossen, die gegen den Kanalkörper 110 gepresst wird. Fluid kann im Betrieb von dem Fluidkanal 111 durch den Durchlass 112 hindurch zu dem Verteilerkanal 122 gelangen.

Die Auslässe 121 sind in dem Kanalkörper 110 ausgebildet. Insbesondere werden die Auslässe 121 ebenfalls von der Bipolarplatte 202 verschlossen, die gegen den Kanalkörper 110 gepresst wird.

Die Auslässe 121 sind jeweils fluidisch mit der Verteilerstruktur 120 verbunden. Somit kann das Fluid im Betrieb aus der Verteilerstruktur 120 durch die Auslässe 121 hindurch in die Halbzelle 201 gelangen.

Die Auslässe 221 sind beispielsweise radial verlaufend ausgehend von dem Verteilerkanal 122 nach außen ausgerichtet. Die Form des Kanalkörpers 110 ermöglicht eine unterschiedliche Länge der Auslässe 121. Figur 3 zeigt exemplarisch eine äußere Form des Kanalkörpers 110, sodass die Auslässe 121 in einem unteren Bereich neben dem Durchlass 112 länger ausgebildet sind als in einem oberen Bereich. Auch andere Formen des Kanalkörpers 110, die zu anderen Verteilungen der unterschiedlichen Längen der Auslässe 121 führen, sind selbstverständlich möglich. Insbesondere ist die Kanalkörperform des Kanalkörpers 110 so vorgegeben, dass sich gewünschte Fluidwiderstände an den Auslässen 121 ergeben, die zu einer gewünschten Strömungsverteilung im Betrieb in der Halbzelle 201 führen.

Es ist auch möglich, dass nicht die Bipolarplatte 202 direkt gegen den Kanalkörper 110 gepresst wird, sondern ein weiterer Kanalkörper, der nicht explizit dargestellt ist, gegen den Kanalkörper 110 gepresst wird. Beispielsweise weist der weitere Kanalkörper eine weitere Verteilerstruktur auf, die zu der Verteilerstruktur 120 korrespondierend ausgestaltet ist, sodass der Kanalkörper 110 und der weitere Kanalkörper gemeinsam die Strömung des Fluids aus dem Fluidkanal 111 durch den Verteilerkanal 122 und die Auslässe 121 ermöglichen.

Die Auslässe 121 erstrecken sich strahlenförmig radial nach außen von dem Verteilerkanal 122 weg. In einem unteren Bereich 124 des Verteilerkanals 122, in den der Durchlass 112 mündet, sind beispielsweise keine Auslässe 121 vorgesehen. Mittels der äußeren Kontur des Kanalkörpers 110, insbesondere dem Bereich, der in die Halbzelle 201 hineinragt, lässt sich die Länge der Auslässe 121 jeweils verlängern beziehungsweise verkürzen, um eine gewünschte Strömungsverteilung zu realisieren. Beispielsweise sind die Auslässe 121, die in Strömungsrichtung näher an dem Durchlass 112 angeordnet sind, länger ausgebildet, um hier einen größeren Fluidwiderstand zu haben als in einem Bereich, der in Strömungsrichtung weiter von dem Durchlass 112 entfernt liegt. Hier sind die Auslässe 121 beispielsweise kürzer ausgebildet, da das Fluid ausgehend von dem Durchlass 112 bereits in dem Verteilerkanal 122 einen Fluidwiderstand erfahren hat und beispielsweise auch nach oben strömen muss.

Figur 4 zeigt das Kanalstück 100 gemäß einem weiteren Beispiel. Das Beispiel gemäß Figur 4 entspricht im Wesentlichen dem Beispiel gemäß Figur 3. Zusätzlich ist ein Vorsprung 113 vorgesehen. Der Kanalkörper 110 weist den Vorsprung 113 auf, der in Richtung des Zentrums des Fluidkanals 111 vorspringt. Der Vorsprung 113 springt ausgehend von dem Verteilerkanal 122 nach innen vor. Insbesondere ist der Durchlass 112 in dem Vorsprung 113 angeordnet. Insbesondere ist der Einlass 116 an dem Vorsprung 113 angeordnet.

Der Vorsprung 113 ist beispielsweise vorgesehen, um die Länge des Durchlasses 112 im Vergleich zu dem Beispiel gemäß Figur 3 zu verlängern. Dies ermöglicht beispielsweise eine höhere Drosselwirkung des Durchlasses 112. Der Vorsprung 113, der in den Freiraum des Fluidkanals 111 vorspringt, benötigt hierfür insbesondere keinen zusätzlichen Bauraum. Die Außenkontur des Kanalstücks 100 ist beispielsweise beim Beispiel gemäß Figur 3 gleichartig ausbildbar wie beim Beispiel gemäß Figur 4.

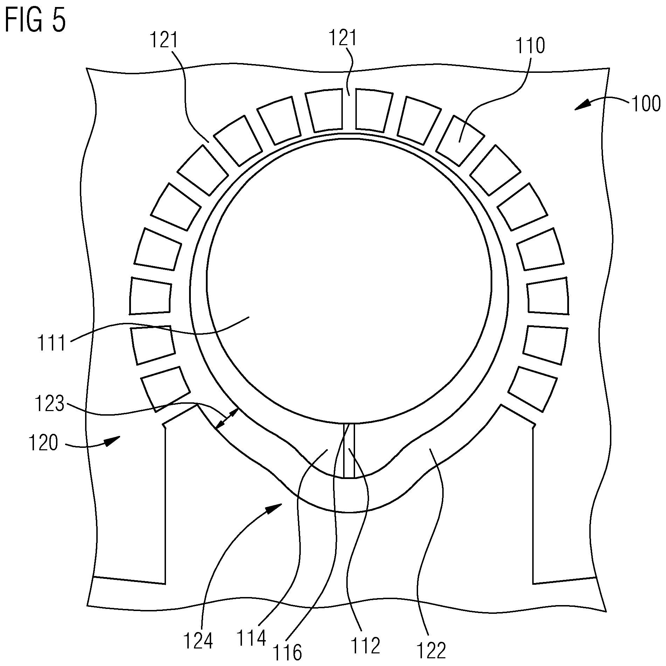

Figur 5 zeigt das Kanalstück 100 gemäß einem weiteren Beispiel. Das Kanalstück 100 gemäß Figur 5 entspricht im Wesentlichen den Kanalstücken 100 gemäß Figuren 3 und 4. Im Unterschied ist der Kanalkörper 110 gemäß Figur 5 so ausgebildet, dass der Verteilerkanal 120 nicht konzentrisch zum Fluidkanal 111 ausgebildet ist. Zudem ist beispielsweise kein Vorsprung 113 vorgesehen, der nach innen in den Fluidkanal 111 vorspringt.

Der Fluidkanal 122 ist exzentrisch zu dem insbesondere runden Fluidkanal 111 angeordnet. Somit weist der Verteilerkanal 122 ausgehend von dem Durchlass 112 nach oben unterschiedliche Querschnitte 123 auf. Insbesondere ist der Querschnitt 123 entlang der Strömungsrichtung an dem Durchlass 112 größer als entlang der Strömungsrichtung nachgelagert, beispielsweise oben am Kanalkörper 110. Entlang der Strömungsrichtung verkleinert sich der Querschnitt 123 beispielsweise. Somit ist ein Fluidwiderstand entlang des Verteilerkanals 122 gewünscht vorgebbar.

Der Kanalkörper 110 weist beispielsweise eine Ausbuchtung 114 auf. Auf die Ausbuchtung 114 wird gemäß weiteren, nicht explizit dargestellten Beispielen verzichtet. Es ist auch möglich, dass ein Vorsprung 113, wie im Zusammenhang mit Figur 4 erläutert, vorgesehen ist.

Die Ausbuchtung 114 springt weg von dem Fluidkanal 111 vor. Der Durchlass 112 ist beispielsweise in der Ausbuchtung 114 vorgesehen. Vergleichbar zu dem Vorsprung 113 ist es mit der Ausbuchtung 114 somit möglich, die Länge des Durchlasses 112 zu verlängern, ohne dass hierfür zusätzlicher Bauraumbedarf benötigt wird. Dies ermöglicht einen höheren Fluidwiderstand mittels des Durchlasses 112.

Ausgehend von der Ausbuchtung 115 verjüngt sich der Verteilerkanal 122 entlang der Strömungsrichtung um den Fluidkanal 111 herum. Die Ausbuchtung 114 ermöglicht die Verlängerung des Durchlasses 112, ohne dass der innere Querschnitt des Fluidkanals 111 maßgeblich beeinträchtigt wird. Mittels unterschiedlicher Durchmesser der Auslässe 121 und/oder der äußeren Kontur des Kanalkörpers 110 und somit unterschiedlicher Längen der Auslässe 121 sind zudem verschiedene Strömungswiderstände realisierbar, um die gewünschte Fluidströmung in der Halbzelle 201 zu realisieren.

Die Anordnung 200 weist die Mehrzahl von Kanalstücken 100 gemäß einem Beispiel auf, wobei auch Kombinationen der Beispiele möglich sind, beispielsweise die äußere Kontur gemäß Figur 3 und die Ausgestaltung mit dem veränderbaren Querschnitt 123 gemäß Figur 5 und weitere Kombinationen der unterschiedlichen Beispiele gemäß Figuren 2 bis 5, insbesondere gemäß der Figuren 3 bis 5. Um die beiden Fluidkanäle 111 auszubilden, wie in Figur 1 dargestellt, weist die Bipolarplatte 201 beziehungsweise weisen die Mehrzahl der Bipolarplatten 202 jeweils zwei Löcher auf für den jeweiligen Kanalkörper 110. Die Kanalkörper 110 jeder Bipolarplatte 202 sind beispielsweise umgedreht zueinander angeordnet, sodass bei dem einen Kanalkörper 110 die Montageschnittstelle 115 in die Stapelrichtung 204 vorspringt und bei dem anderen der Kanalkörper 110 die Montageschnittstelle 115 entgegen der Stapelrichtung 204 vorspringt.

Die Durchlässe 112 der Kanalkörper 110 sind jeweils so ausgestaltet, insbesondere in Bezug auf Ausrichtung, Querschnitt, Länge und/oder innerer Struktur, dass eine gewünschte Verteilung über die Halbzellen 201 der Anordnung 200 erreicht wird, beispielsweise eine gleichmäßige Verteilung des Fluids in die Halbzellen 201. Die Auslässe 221 des jeweiligen Kanalkörpers 110 sind insbesondere so ausgestaltet, beispielsweise im Bezug auf Ausrichtung, Querschnitt, Länge und/oder innerer Struktur, dass mittels der Auslässe 121 die gewünschte Strömungsverteilung in der jeweiligen Halbzelle 201 wie vorgegeben realisierbar ist. Die beiden Kanalstücke 110 je Bipolarplatte 201 sind vergleichsweise nahe beieinander anordenbar, da jeder Kanalkörper 110 nur vergleichsweise wenig Flächenbedarf hat.

Mit anderen Worten kann das grundlegende Prinzip wie folgt beschrieben werden. Von dem Einlass 116 bis zu den Auslässen 121 bilden sämtliche fluidleitenden Elemente der Verteilerstruktur 120 einen Gesamtwiderstand aus. Dieser wirkt insbesondere von dem Einlass 116 bis zu sämtlichen Auslässen 121 entgegen des Fluidflusses. Einen ersten Teilwiderstand des Gesamtwiderstandes bildet der Durchlass 112 aus. Selbiger ist beispielsweise maßgeblich für die Fluidverteilung zwischen den Zellen bzw. Halbzellen 201 untereinander. Weitere Teilwiderstände des Gesamtwiderstandes bilden die Wegstrecken und Querschnitte vom Übergang des Durchlass 112 in den Verteilerkanal 122 bis hin zu den Auslässen 121 aus. Diese weiteren Teilwiderstände sind beispielsweise maßgeblich für die Verteilung entlang des Verteilerkanals 122 für die flächige Verteilung in der Halbzelle 201. Ferner besteht beispielsweise eine Wechselwirkung zwischen dem ersten Teilwiderstand und den weiteren Teilwiderständen.

Das aufgezeigte Prinzip kann auch Anwendung finden bei einer rechteckigen äußeren Form der Halbzelle 201.

Beispielsweise ist in Figur 5 gezeigt, wie es gelingt, den ersten Teilwiderstand mittels einer verlängerten Wegstrecke des Durchlasses 112 in der Ausbuchtung 114 zu gestalten. Ferner ist der Durchlass 112 beispielsweise mit einem vergleichsweise geringen Querschnitt ausgeführt, was einen hohen ersten Teilwiderstand zur Folge hat. Die Auslässe 121 und die weiteren Teilwiderstände wurden hier beispielhaft so ausgelegt, dass diese für eine runde äußere Form einer Halbzelle 201 vorteilhaft sind.

Beispielsweise ist ein Zellrahmen (nicht explizit dargestellt) der Halbzelle 201 vorgesehen, in dem beispielsweise die Bipolarplatte 202 gehalten ist. Der Zellrahmen ist insbesondere bei rechteckigen Halbzellen 201 vorgesehen.

Es ist möglich, dass die Verteilerstruktur 120 in den Zellrahmen integriert ist. Beispielsweise ist der Kanalkörper 110 somit Teil des Zellrahmens. Beispielsweise ist der Kanalkörper 110 integraler Bestandteil des Zellrahmens. Beispielsweise sind der Kanalkörper 110 und der Zellrahmen einstückig ausgebildet.

Es ist auch möglich, dass das der Kanalkörper separat zu dem Zellrahmen ausgebildet ist und beispielsweise innerhalb der Halbzelle 201 auf der effektiv wirksamen Fläche angeordnet ist, vergleichbar zu der Anordnung wie in Figur 1 dargestellt.

Beispielsweise wird eine möglichst gute Gleichverteilung über die effektiv wirksame Fläche ermöglicht. Das kann beispielsweise erreicht werden durch ein demensprechendes Ausbilden der weiteren Teilwiderstände.

Die Teilwiderstände sind beispielsweise unabhängig von der Flächengeometrie bezüglich des jeweiligen Auslasses 121 prinzipiell derart gestaltet, dass bei der kürzesten Wegstrecke des Fluidflusses durch die Halbzelle 201 bzw. über die effektiv wirksame Fläche der höchste weitere Teilwiderstand zu wählen ist. Bei gleichen Wegstrecken über die effektiv wirksame Fläche wie bei einer rechteckigen äußeren Form sind beispielsweise gleiche Teilwiderstände gewählt.

Es kann auch bei einer rechteckigen äußeren Form von Vorteil sein, ein oder zwei Fluidkanäle 111 vorzusehen. Diese können eher mittig oder eher außermittig angeordnet sein. In einem Beispiel, in dem Auslässe an den Rändern der Halbzelle 201 gleich beabstandet angeordnet sind, sind die unmittelbaren Abstände der Auslässe 121 bis zu den Fluidkanälen 111 nicht gleich. Bevorzugt sind allerdings gleiche Teilwiderstände. Je Auslass 121 bilden die längsten unmittelbaren Abstände beispielsweise die Vorgabe für den kleinstmöglich realisierbaren weiteren Teilwiderstand. Für die übrigen Auslässe ist die Verteilstruktur beispielsweise so gestaltet, dass die weiteren Teilwiderstände wie gewünscht angepasst sind. Das kann beispielsweise indem realisiert werden, dass die Wegstrecken der Fluidleitung 132 in der Verteilerstruktur 120 bei gleichem Querschnitt je Auslass in Etwa gleich lang bemessen angelegt sind durch Umwege.

Das Kanalstück 100 gemäß den unterschiedlichen Beispielen ermöglicht jeweils bei vergleichsweise geringem Bauraumbedarf eine zuverlässige Verteilung des Fluids in den Halbzellen 201 der gesamten Anordnung 200 und eine gewünschte Strömung in jeder der Halbzellen 201. Somit ist ein effizienter und verlässlicher Betrieb ermöglicht.

### Bezugszeichen

- 100: Kanalstück
- 110: Kanalkörper
- 111: Fluidkanal
- 112: Durchlass
- 113: Vorsprung
- 114: Ausbuchtung
- 115: Montageschnittstelle
- 116: Einlass
- 120: Verteilerstruktur
- 121: Auslass
- 122: Verteilerkanal
- 123: Querschnitt
- 124: Bereich
- 130: Verteilkörper
- 131: Eingang
- 132: Fluidleitung
- 140: Mutter

- 200: Brennstoff- und/oder eine Elektrolysezellenanordnung
- 201: Halbzelle
- 202: Bipolarplatte
- 203: Fluidzuleitung
- 204: Stapelrichtung
- 205: Querrichtung

## Patentansprüche

1. Kanalstück (100) für eine Brennstoff- und/oder eine Elektrolysezellenanordnung (200), aufweisend:
- einen Kanalkörper (110), der einen Fluidkanal (111) umgibt,
- einen Durchlass (112), der in dem Kanalkörper (110) ausgebildet ist und mit dem Fluidkanal (111) verbunden ist,
- eine Verteilerstruktur (120), die mit dem Durchlass (112) verbunden ist, wobei die Verteilerstruktur (120) eine Mehrzahl von Auslässen (121) aufweist, um ein Fluid in eine Halbzelle (201) der Brennstoff- und/oder der Elektrolysezellenanordnung (200) zu leiten, wobei der Durchlass (112) ausgebildet ist, einen Fluidfluss durchzuleiten von dem Fluidkanal (111) zu der Verteilerstruktur (120).

2. Kanalstück gemäß dem vorhergehenden Anspruch, aufweisend einen länglich ausgedehnten Verteilkörper (130), wobei der Verteilkörper (130) die Verteilerstruktur (120) aufweist und fluidleitfähig mit dem Durchlass (112) verbunden ist.

3. Kanalstück gemäß Anspruch 2, wobei der Verteilkörper (130) und der Kanalkörper (110) als separate Bauteile ausgebildet sind, die miteinander koppelbar sind.

4. Kanalstück gemäß einem der vorhergehenden Ansprüche, bei dem der Kanalkörper (110) die Verteilerstruktur (120) aufweist.

5. Kanalstück gemäß Anspruch 4, bei dem die Verteilerstruktur (120) einen Verteilerkanal (122) aufweist, wobei
- der Verteilerkanal (122) um den Fluidkanal (111) umlaufend angeordnet ist,
- der Verteilerkanal (122) mit dem Durchlass (112) verbunden ist für einen Fluidfluss zwischen dem Durchlass (112) und dem Verteilerkanal (122), und
- der Verteilerkanal (122) mit der Mehrzahl von Auslässen (121) verbunden ist für einen Fluidfluss zwischen dem Verteilerkanal (122) und der Mehrzahl von Auslässen (121).

6. Kanalstück gemäß Anspruch 4 oder 5, bei dem der Verteilerkanal (122) ringförmig konzentrisch zu dem Fluidkanal (111) ausgebildet ist.

7. Kanalstück gemäß Anspruch 4 oder 5, bei dem der Verteilerkanal (122) exzentrisch zu dem Fluidkanal (111) ausgebildet ist.

8. Kanalstück gemäß Anspruch 7, bei dem der Verteilerkanal (122) entlang seines Verlaufs unterschiedlich große Querschnitte (123) aufweist.

9. Kanalstück gemäß einem der Anspruch 4 bis 8, bei dem der Durchlass (112) in einem Bereich (124) des Verteilerkanals (122) mit dem Verteilerkanal (122) verbunden ist, der frei von Auslässen (121) ist.

10. Kanalstück gemäß einem der Anspruch 4 bis 9, bei dem der Kanalkörper (110) einen Vorsprung (113) aufweist, der in den Fluidkanal (111) vorspringt, wobei der Durchlass (112) in dem Vorsprung (113) ausgebildet ist.

11. Kanalstück gemäß einem der Anspruch 4 bis 10, aufweisend eine Ausbuchtung (114), die weg von den Fluidkanal (111) vorspringt, wobei der Durchlass (112) in der Ausbuchtung (114) ausgebildet ist.

12. Kanalstück gemäß einem der Ansprüche 1 bis 11, wobei der Kanalkörper (110) aus einem elektrisch isolierenden Material gebildet ist.

13. Kanalstück gemäß einem der Ansprüche 1 bis 12, wobei der Kanalkörper (110) eine Montageschnittstelle (115) aufweist zur Montage einer Bipolarplatte (202).

14. Brennstoff- und/oder Elektrolysezellenanordnung (200), aufweisend:
- eine Mehrzahl von Halbzellen (201),
- eine Mehrzahl von Kanalstücken (100) gemäß einem der Ansprüche 1 bis 13, wobei die Kanalstücke (100) so miteinander gekoppelt sind, dass die Fluidkanäle (111) der Kanalstücke (100) gemeinsam eine Fluidzuleitung (203) zum Leiten von Fluid in die Halbzellen (201) ausbilden, wobei die jeweiligen Durchlässe (112) der Kanalstücke (100) vorgegeben dimensioniert sind für eine vorgegebene Verteilung des Fluids über die Halbzellen (201).

15. Brennstoff- und/oder eine Elektrolysezellenanordnung (200) gemäß Anspruch 14, bei dem die Halbzellen (201) jeweils einen Zellrahmen aufweisen, wobei der Kanalkörper (110) in dem Zellrahmen angeordnet ist.

## Geänderte Patentansprüche

### Geänderte Patentansprüche gemäss Regel 137(2) EPÜ.

1. Kanalstück (100) für eine Elektrolysezellenanordnung (200), aufweisend:
- einen Kanalkörper (110), der einen Fluidkanal (111) umgibt und der eine Verteilerstruktur (120) aufweist,
- einen Durchlass (112), der in dem Kanalkörper (110) ausgebildet ist und mit dem Fluidkanal (111) verbunden ist,
- die Verteilerstruktur (120), die mit dem Durchlass (112) verbunden ist, wobei die Verteilerstruktur (120) eine Mehrzahl von Auslässen (121) aufweist, um ein Fluid in eine Halbzelle (201) der Elektrolysezellenanordnung (200) zu leiten, wobei der Durchlass (112) ausgebildet ist, einen Fluidfluss durchzuleiten von dem Fluidkanal (111) zu der Verteilerstruktur (120), wobei eine Kanalkörperform des Kanalkörpers (110) so vorgegeben ist, dass gewünschte Fluidwiderstände an den Auslässen (121) individuell vorgebbar sind für eine gewünschte Strömungsverteilung im Betrieb in der Halbzelle (201).

2. Kanalstück gemäß Anspruch 1, bei dem die Verteilerstruktur (120) einen Verteilerkanal (122) aufweist, wobei
- der Verteilerkanal (122) um den Fluidkanal (111) umlaufend angeordnet ist,
- der Verteilerkanal (122) mit dem Durchlass (112) verbunden ist für einen Fluidfluss zwischen dem Durchlass (112) und dem Verteilerkanal (122), und
- der Verteilerkanal (122) mit der Mehrzahl von Auslässen (121) verbunden ist für einen Fluidfluss zwischen dem Verteilerkanal (122) und der Mehrzahl von Auslässen (121).

3. Kanalstück gemäß Anspruch 1 oder 2, bei dem der Verteilerkanal (122) ringförmig konzentrisch zu dem Fluidkanal (111) ausgebildet ist.

4. Kanalstück gemäß Anspruch 1 oder 2, bei dem der Verteilerkanal (122) exzentrisch zu dem Fluidkanal (111) ausgebildet ist.

5. Kanalstück gemäß Anspruch 4, bei dem der Verteilerkanal (122) entlang seines Verlaufs unterschiedlich große Querschnitte (123) aufweist.

6. Kanalstück gemäß einem der Anspruch 1 bis 5, bei dem der Durchlass (112) in einem Bereich (124) des Verteilerkanals (122) mit dem Verteilerkanal (122) verbunden ist, der frei von Auslässen (121) ist.

7. Kanalstück gemäß einem der Anspruch 1 bis 6, bei dem der Kanalkörper (110) einen Vorsprung (113) aufweist, der in den Fluidkanal (111) vorspringt, wobei der Durchlass (112) in dem Vorsprung (113) ausgebildet ist.

8. Kanalstück gemäß einem der Anspruch 1 bis 7, aufweisend eine Ausbuchtung (114), die weg von den Fluidkanal (111) vorspringt, wobei der Durchlass (112) in der Ausbuchtung (114) ausgebildet ist.

9. Kanalstück gemäß einem der Ansprüche 1 bis 8, wobei der Kanalkörper (110) aus einem elektrisch isolierenden Material gebildet ist.

10. Kanalstück gemäß einem der Ansprüche 1 bis 9, wobei der Kanalkörper (110) eine Montageschnittstelle (115) aufweist zur Montage einer Bipolarplatte (202).

11. Elektrolysezellenanordnung (200), aufweisend:
- eine Mehrzahl von Halbzellen (201),
- eine Mehrzahl von Kanalstücken (100) gemäß einem der Ansprüche 1 bis 10, wobei die Kanalstücke (100) so miteinander gekoppelt sind, dass die Fluidkanäle (111) der Kanalstücke (100) gemeinsam eine Fluidzuleitung (203) zum Leiten von Fluid in die Halbzellen (201) ausbilden, wobei die jeweiligen Durchlässe (112) der Kanalstücke (100) vorgegeben dimensioniert sind für eine vorgegebene Verteilung des Fluids über die Halbzellen (201).

12. Elektrolysezellenanordnung (200) gemäß Anspruch 11, bei dem die Halbzellen (201) jeweils einen Zellrahmen aufweisen, wobei der Kanalkörper (110) in dem Zellrahmen angeordnet ist.
